# EUROPÄISCHE PATENTSCHRIFT

(11) **EP 1 298 010 B1**
(45) Veröffentlichungstag und Bekanntmachung des Hinweises auf die Patenterteilung: **05.04.2006**
(21) Anmeldenummer: 02015996.8
(22) Anmeldetag: 18.07.2002
(51) Int. Cl.: B60R 21/00

(54) **Verfahren zum Auslösen eines Fahrzeuginsassen-Rückhaltemittels**
Method for triggering a passenger restraining device in a vehicle
Procédé pour déclencher un dispositif de retenue du passager d'un véhicule automobile

(30) Priorität: 27.09.2001 DE 10147732
(43) Veröffentlichungstag der Anmeldung: 02.04.2003
(73) Patentinhaber: Bayerische Motoren Werke Aktiengesellschaft, 80809 München (DE)
(72) Erfinder: Link, Andrea, 81545 München (DE); Urbahn, Jan, 80939 München (DE); Watzka, Willibald, 86551 Aichach (DE); Niess, Michael, 85221 Dachau (DE); Maurer, Christian, 85659 Karlsdorf/Forstern (DE)

(56) Entgegenhaltungen:
- DE-A- 19 816 989
- US-A- 5 999 871
- US-B1- 6 219 606
- PATENT ABSTRACTS OF JAPAN vol. 2002, no. 02, 2. April 2002 (2002-04-02) -& JP 2001 294115 A (CHUN SHAN INST OF SCIENCE & TECHNOLOGY), 23. Oktober 2001 (2001-10-23)

## Beschreibung

Die Erfindung bezieht sich auf ein Verfahren zum Auslösen eines Fahrzeuginsassen-Rückhaltemittels mit den im Oberbegriff des Patentanspruchs 1 angegebenen Merkmalen.

Ein derartiges Verfahren ist aus der US 5,999,871 A, die als nächstliegender Stand der Technik betrachtet wird, bekannt. Die Crashschwere wird an Hand eines Beschleunigungssignals bestimmt, das von einem Beschleunigungsgeber geliefert wird. Erreicht es einen vorgegebenen Schwellwert, ist dies gleichbedeutend mit dem Erreichen der maßgeblichen Crashschwere. Das Rückhaltemittel, hier eine erste Stufe eines Airbags, wird sofort ausgelöst. Problematisch bei diesem Auslösealgorithmus ist die schwierige Unterscheidbarkeit eines tatsächlichen Crashs und einer extremen Beanspruchung des Fahrzeugs, beispielsweise bei einer schnellen Fahrt über eine Schotter-/und Schlaglochstrecke. Dabei treten Beschleunigungen auf, die mit denen eines tatsächlichen Crashs vergleichbar sind. Um bei einer derartigen Fahrt das Rückhaltemittel nicht auszulösen, wird der maßgebliche Schwellwert werksseitig erhöht mit der möglichen Folge, bei einem Crash das Rückhaltemittel nicht oder zumindest nicht rechtzeitig auszulösen. Hinzu kommt die fehlende Übereinstimmung des Absprechverhaltens des Sensors bei verschiedenen Fahrzeugen desselben Herstellers und desselben Typs. Es hat sich gezeigt, dass die Stabilität makroskopisch identischer Fahrzeuge unterschiedlich sein kann. Da die Wirkungsweise eines Beschleunigungssensors von dieser Stabilität abhängt, erfolgt das Auslösen des Rückhaltemittels unter der selbstverständlichen Annahme eines identischen Crashs bei baugleichen Fahrzeugen unterschiedlich.

Es ist ferner aus der US-B1-6,219,606 bekannt, die Rückhaltemittel sofort, d.h. vor Ablauf einer Verzögerungszeit auszulösen, wenn eine besonders große Crashschwere vorliegt. Die Auslösung erfolgt entweder bei Ablauf einer Verzögerungszeit oder während dieser Verzögerungszeit bei Auftreten der besonderen Crashschwere.

Der Erfindung liegt die Aufgabe zugrunde, ein Verfahren der eingangs genannten Art zu schaffen, das sich durch einen konstanten und reproduzierbaren Auslösezeitpunkt für das Rückhaltemittel auszeichnet.

Die Erfindung löst diese Aufgabe durch die im Patentanspruch 1 angegebenen Merkmale.

Bei Auftreten einer ersten leichten Crashschwere wird der Zeitgeber gestartet. Es kann dabei darauf verzichtet werden, zwischen der o.g. stark beanspruchenden Fahrt und einem Crash zu unterscheiden. Das bedeutet, dass auch bei einer derartigen Fahrt der Zeitgeber ausgelöst werden kann. Erst durch die zusätzliche Auslösebedingung in Form des Auftretens der höheren Crashschwere wird eindeutig der Crashfall erkannt.

Die Auslösezeit für das Rückhaltemittel wiederum ist durch den Zeitgeber bestimmt. Das Rückhaltemittel wird am Ende der Laufzeit des Zeitgebers ausgelöst, wenn während dieser Laufzeit die höhere Crashschwere aufgetreten ist. Alternativ erfolgt die Auslösung nach Ablauf dieser Laufzeit, wenn die höhere Crashschwere erst nach diesem Ablauf auftritt und unmittelbar, sobald diese höhere Crashschwere auftritt.

Voraussetzung dafür ist lediglich, dass der Zeitgeber noch nicht zurückgesetzt ist. Dieses Rücksetzen erfolgt, sobald von der Auswerteeinheit eindeutig erkannt wird, dass kein Crashfall vorliegt. Dies ist beispielsweise an Hand eines Wertes "0" des Beschleunigungssensorsignals erkennbar. Alternativ kann diese Deaktivierung durch ein unabhängiges Kriterium, z.B. durch das Zurücksetzen des Alarms durch einen Safing-Sensor erfolgen.

Im Gegensatz zur US-B1-6,219,606 ist eine Auslösung vor Ablauf der Auslösezeit nicht möglich. Auch bei Ablauf der Auslösezeit erfolgt diese Auslösung nicht wie dort quasi automatisch, sondern nur dann, wenn während der Auslösezeit die besondere Crashschwere aufgetreten ist.

Schließlich erfolgt die Auslösung bei der Erfindung sofort bei Auftreten der besonderen Crashschwere, wenn zuvor die Auslösezeit abgelaufen ist.

Erst bei der Erfindung wird es damit möglich, klar und eindeutig den Auslösefall vom sogenannten Misuse-Fall zu unterscheiden. Letzterer liegt bei einer anormalen, mit einem Crashfall vergleichbaren kurzzeitigen und einmaligen Auftreten einer besonders hohen Fahrzeugbeschleunigung vor, wie sie bei Überfahren einer Schwelle mit hoher Geschwindigkeit vorliegt. In diesem Fall kann das Beschleunigungssignal mit dem bei einer besonderen Crashschwere vergleichbar sein. Das aus der US-B1-6,219,606 bekannte Verfahren löst in diesem Fall aus. Bei der Erfindung wird, bedingt durch die Berücksichtigung zweier Crashschwereniveaus in Verbindung mit der Auslösezeit nicht ausgelöst.

Vorteilhafte Weiterbildungen und Ausgestaltungen der Erfindung sind in den abhängigen Patentansprüchen angegeben.

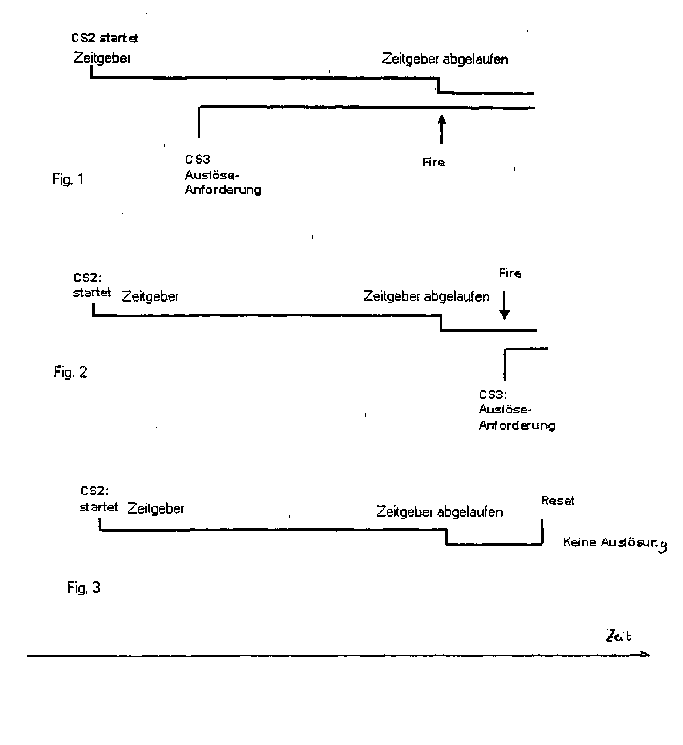

An Hand der Figuren 1 bis 3 wird die Erfindung weiter erläutert. Die Figuren zeigen die möglichen Szenarien in schematisierter Form: ,
Figur 1:
   Eine Crashschwere ("CS"), deren Wert CS2 über einem beim normalen Fahrbetrieb auftretenden Wert von CS1 liegt, führt zum Start eines nicht dargestellten Zeitgebers. Dieser zählt während einer Laufzeit von beispielsweise 10 ms von seinem Ausgangswert auf den Wert "0" herunter. Vor Ablauf dieser Laufzeit tritt die zweite Bedingung für das Auslösen des Rückhaltemittels auf: Eine höhere Crashschwere CS3 tritt ein. Der Zündkreis (nicht dargestellt) für das Rückhaltemittel wird am Ende der Laufzeit des Zeitgebers gezündet ("Fire").
Figur 2:
   CS2 führt zum Start des Zeitgebers. Die Laufzeit läuft ab, der Zeitgeber bleibt auf 0 ms Wartezeit stehen. Erst danach tritt die zweite Bedingung in Form der höheren Crashschwere CS3 ein. Die Ansteuerung des Zündkreises ("Fire") erfolgt sofort, da der Zeitgeber bereits abgelaufen ist.
Figur 3:
   CS2 führt zum Zeitgeberstart. Die Laufzeit läuft ab, der Zeitgeber bleibt auf bei 0 ms stehen. Der Zeitgeber wird durch ein Reset-Kriterium deaktiviert. Der Zündkreis wird nicht ausgelöst. Tritt nachfolgend wieder die Crashschwere CS2 auf, erfolgt der Ablauf analog zu a) oder b) bzw. beim anschließenden Rücksetzen analog c).

Durch die erweiterte Funktionalität des Zeitgebers werden die Zündzeitpunkte deutlich konstanter:
Die Crashschwere CS2 wird sehr früh und sehr reproduzierbar erkannt. Dies bedeutet, dass bei Wiederholung des gleichen Geschehens mit dem gleichen Fahrzeug CS2 auch zum gleichen Zeitpunkt erkannt wird.
Der Zeitpunkt der Erkennung von CS3 schwankt dagegen stärker. Die Crashschweren sind gerade so definiert, dass CS2 sehr reproduzierbar ist, CS3 dagegen so früh wie möglich erkannt werden soll. Wenn sich die Zeitgeberzeiten nun auf CS2 beziehen und CS3 vor Ablauf der Zeitgeberzeit erkannt wird, führt dies auch zu konstanten Zündzeitpunkten, auch wenn die Zeiten bis zur CS3-Erkennung schwanken. Eine Auslösung bei CS2 ist nicht erwünscht, da diese auch bei Unfällen mit niedriger Energie erkannt wird, bei denen der Zündkreis gar nicht notwendig ist.

Zur Auslösung des Zündkreises ist der Zeitgeberablauf und Auslöseanforderung notwendig. Im Fall von Figur 1 und 2 erfolgt eine Zündung. Im Fall von Figur 3 wird nur der Zeitgeber gestartet, es erfolgt keine Zündung.

## Patentansprüche

1. Verfahren zum Auslösen eines Fahrzeuginsassen-Rückhaltemittels, bei dem mindestens ein von einem Crash-Sensor erzeugtes Sensorsignal einer Auswerteeinrichtung zugeführt wird, und bei dem die Auswerteeinrichtung aus dem ihr zugeführten Sensorsignal die Crashschwere und eine für das Auslösen des Rückhaltemittels entsprechend der Crashschwere maßgebliche Auslösezeit bestimmt, **dadurch gekennzeichnet, dass** bei Auftreten einer ersten leichten Crashschwere der Zeitgeber für die Auslösezeit gestartet wird, und dass das Rückhaltemittel von der Auswerteeinrichtung ausgelöst wird
- bei Ablauf der Auslösezeit, wenn während der Auslösezeit eine höhere Crashschwere erreicht wird, oder
- im Anschluss an die Auslösezeit unmittelbar dann, sobald eine höhere Crashschwere erreicht wird.

2. Verfahren nach Anspruch 1, **dadurch gekennzeichnet, dass** der Zeitgeber rückwärts bis zu dem für das Auslösen des Rückhaltemittels maßgeblichen Wert "0" zählt und dass bei Auftreten der höheren Crashschwere der Zeitgeber unmittelbar auf den Wert "0" gesetzt wird.

3. Verfahren nach Anspruch 1, **dadurch gekennzeichnet, dass** das Rückhaltemittel von der Auswerteeinheit bei Ablauf der mit dem Zeitgeber bestimmten Auslösezeit ausgelöst wird.

4. Verfahren nach Anspruch 1, **dadurch gekennzeichnet, dass** der Zeitgeber bei Vorliegen bestimmter Bedingungen rücksetzbar ist und dass er nach seiner Laufzeit und bei Erreichen der höheren Crashschwere das Rückhaltemittel auslöst, solange er noch nicht zurückgesetzt ist.

## Claims

1. A method of triggering a passenger restraining device wherein at least one signal generated by a crash sensor is supplied to an evaluating device and wherein the evaluating device, using the sensor signal supplied to it, determines the severity of the crash and a critical time for triggering the restraining means depending on the severity of the crash, **characterised in that** if a first non-severe crash severity applies the timer or the triggering time is started, and the restraining means is triggered by the evaluating device under the following circumstances:
- at the end of the triggering time if the crash becomes more severe during the triggering time, or
- after the triggering time, immediately the crash becomes more severe.

2. A method according to claim 1, **characterised in that** the timer counts backwards up to the critical value zero for triggering the restraining means, and when the crash becomes more severe the timer is immediately set at zero.

3. A method according to claim 1, **characterised in that** the restraining means is triggered by the evaluating unit at the end of the triggering time determined by the timer.

4. A method according to claim 1, **characterised in that** under certain conditions the timer can be reset, and after its running time and when the crash becomes more severe the timer triggers the restraining means until the timer has been reset.

## Revendications

1. Procédé pour déclencher un moyen de retenue d'un passager d'un véhicule, selon lequel au moins un signal de capteur généré par un capteur d'impact est transmis à un dispositif d'exploitation, et le dispositif d'exploitation détermine à partir du signal de capteur reçu la gravité d'impact et un temps de déclenchement normatif pour le déclenchement du moyen de retenue en fonction de la gravité d'impact,
**caractérisé en ce qu'**
en présence d'une première gravité d'impact peu importante, le temporisateur est démarré pour le temps de déclenchement, et
le moyen de retenue est déclenché par le dispositif d'exploitation
- pendant le temps de déclenchement, si, pendant le temps de déclenchement, une gravité d'impact plus importante est atteinte, ou
- directement suite au temps de déclenchement dès qu'une gravité d'impact plus importante est atteinte.

2. Procédé selon la revendication 1,
**caractérisé en ce que**
le temporisateur compte à rebours jusqu'à la valeur « 0 » normative pour le déclenchement du moyen de retenue, et en présence de la gravité d'impact plus importante, le temporisateur est mis directement à la valeur « 0 ».

3. Procédé selon la revendication 1,
**caractérisé en ce que**
le moyen de retenue est déclenché par l'unité d'exploitation au bout du temps de déclenchement déterminé à l'aide du temporisateur.

4. Procédé selon la revendication 1,
**caractérisé en ce qu'**
en présence de conditions déterminées, le temporisateur peut être réinitialisé, et déclenche le moyen de retenue après son temps de marche et lorsque la gravité d'impact la plus importante est atteinte, tant qu'il n'est pas encore réinitialisé.
